## Europäisches Patentamt
## European Patent Office
## Office européen des brevets

(19)

(11) Numéro de publication: **0 023 008**
**B1**

(12) # FASCICULE DE BREVET EUROPEEN

(45) Date de publication du fascicule du brevet: **22.02.84**

(51) Int. Cl.³: **A 23 N 12/02**

(21) Numéro de dépôt: **80104073.4**

(22) Date de dépôt: **14.07.80**

(54) **Machine mobile pour le nettoyage de légumes.**

(30) Priorité: **18.07.79 FR 7918988**

(43) Date de publication de la demande:
**28.01.81 Bulletin 81/4**

(45) Mention de la délivrance du brevet:
**22.02.84 Bulletin 84/8**

(84) Etats contractants désignés:
**AT BE CH DE GB IT LI LU NL SE**

(56) Documents cités:
**DE - C - 947 267**
**FR - A - 1 119 380**
**FR - A - 1 602 022**
**FR - A - 2 338 658**

(73) Titulaire: **Schubetzer, Jean**
**15, rue d'Ensisheim**
**F-68740 Munchhouse (FR)**

(72) Inventeur: **Schubetzer, Jean**
**15, rue d'Ensisheim**
**F-68740 Munchhouse (FR)**

(74) Mandataire: **Nithardt, Roland**
**CABINET ROLAND NITHARDT Rue Edouard**
**Verdan 15**
**CH-1400 Yverdon (CH)**

Courier Press, Leamington Spa, England.

## Machine mobile pour le nettoyage des legumes

La présente invention concerne une machine mobile pour le nettoyage des légumes, en particulier de légumes présentés en bottes, comprenant un plateau horizontal monté sur un arbre rotatif et comportant un treillis métallique tendu sur un cadre circulaire, et une station de lavage munie d'un dispositif de projection d'eau, pourvu de rampes inférieure et supérieur alimentées par une source extérieure de fluide sous pression, ces éléments étant montés sur un châssis équipé de roues pour véhiculer la machine sur son lieu d'utilisation à proximité de la zone de culture.

Un tel dispositif est notamment illustré par le brevet français no 1 602 022 qui décrit une machine de nettoyage des produits maraîchers équipée d'un plateau circulaire horizontal rotatif constitué d'un treillis métallique, ce plateau étant agencé pour traverser une station de lavage pourvue de rampes de gicleurs inférieurs et supérieurs.

Le brevet allemand no 947 267 décrit une machine mobile pour laver des légumes, comportant un châssis équipé de roues, et une bande sans fin pour transporter les légumes dans une station de lavage. La force motrice qui fait avancer la bande est engendrée par de l'eau sous pression.

La première machine décrite par le brevet français, avec son plateau rotatif à grille, est intéressante parce qu'elle permet le nettoyage simultané d'une grande quantité de légumes, qu'elle autorise plusieurs passages successifs à travers la station de lavage et éventuellement le recyclage aisé de l'eau de rinçage. Toutefois, cette machine est stationnaire et nécessite une alimentation en énergie électrique ou le recours à un moteur à combustion interne pour provoquer la rotation de la grille.

La machine selon le brevet allemand a recours à un système de transport linéaire des légumes, ce qui ne permet pas la passage répété des produits à travers la station de lavage. En outre, bien que la force motrice est engendrée par l'eau sous pression, le mécanisme d'entraînement est peu efficace et consomme une grande quantité d'eau.

Bien souvent, à défaut de pouvoir disposer d'une machine qui donne satisfaction, les maraîchers ont encore recours à un nettoyage grossier au jet d'eau, cette opération étant effectuée manuellement avec tous les inconvénients, pertes de temps, gaspillage d'eau et résultats médiocres que cela comporte.

C'est pourquoi la présente invention se propose de pallier un vide en réalisant une machine parfaitement adaptée à une utilisation rentable pour le nettoyage des légumes dans les cultures maraîchères, et qui ne comporte pas les inconvénients cités précédemment.

C'est pourquoi la machine selon l'invention est caractérisé en ce qu'elle comporte un mécanisme hydraulique pour entraîner un plateau en rotation autour de son axe, ce mécanisme comprenant un vérin hydraulique à double effet, une roue d'entraînement solidaire de l'arbre rotatif du plateau et, à proximité de cette roue, deux roues motrices montées dans un même plan que celui de la roue d'entraînement aux extrémités d'une bascule à axe de pivotement central, ces roues étant en appui l'une contre l'autre de telle manière qu'un mouvement rotatif de l'une entraîne par contact un mouvement rotatif de sens contraire de l'autre, et une pièce de liaison pour relier l'extrémité libre de la tige du piston du vérin hydraulique, à un point décentré de l'une des roues motrices de telle manière que le déplacement avant du piston provoque d'une part le pivotement de la bascule dans un premier sens et l'appui de l'une des roues motrices, dite première roue motrice, sur la bande périphérique de la roue d'entraînement et d'autre part le déplacement de ladite roue motrice dans un premier sens, et que le déplacement en arrière du piston provoque d'une part le pivotement de la bascule dans le sens contraire et l'appui de l'autre ou seconde roue motrice sur la bande périphérique de la roue d'entraînement et d'autre part la rotation de la première roue motrice en sens contraire entraînant la rotation de la seconde roue motrice dans le même premier sens, assurant ainsi la rotation continue de la roue d'entraînement par contact alternatif des roues motrices.

Selon une forme de réalisation préférentielle, la station de lavage comporte au moins trois séries de pommes d'aspersion orientables qui giclent de l'eau sous pression selon différentes orientations, pour nettoyer proprement les légumes. Des brosses rotatives, dont l'écartement peut être réglé à volonté, assurent le nettoyage des légumes particulièrement sales.

La présente invention sera mieux comprise en référence à la description d'un exemple de réalisation préférée, et des dessins annexés dans lesquels:

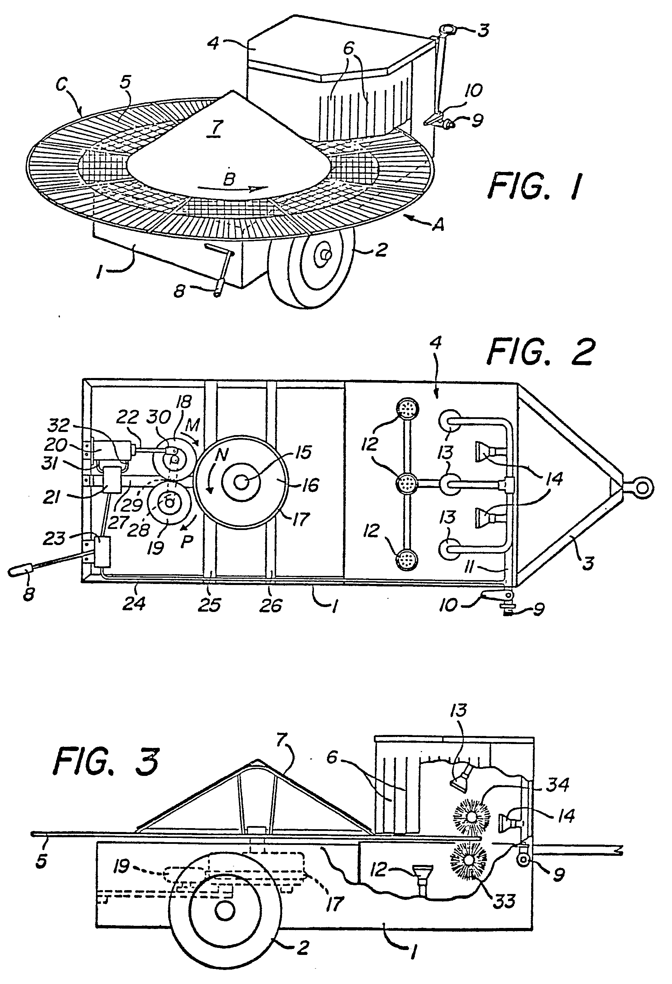

Le figure 1 est une vue en perspective de la machine selon l'invention,

La figure 2 est une vue de dessus de la machine de la fig. 1, dont certaines parties ont été retirées pour permettre de voir le mécanisme d'entraînement et l'intérieur de la station de lavage,

La figure 3 est une vue en élévation de côté d'une variante de la machine de la fig. 2 équipée de brosses rotatives,

La figure 4 est une vue détaillée de plateau portant les légumes à laver, et

La figure 5 est une vue détaillée du carter contenant les moyens d'entraînement des brosses et le mécanisme permettant leur réglage en position.

En référence à la fig. 1, la machine selon l'invention comporte un châssis 1, qui dans l'exemple représenté a la forme d'une remorque équipée de roues 2 et d'un attelage 3. Grâce à cet agencement, la machine peut être tractée sur le lieu d'utilisation, à proximité immédiate de l'emplacement où se font les récoltes. Le châssis, ou véhicule de transport, comprend d'autre part des moyens de support pour amener les légumes vers une station de lavage 4. Ces moyens de support sont de préférence constitués par un plateau rotatif 5, monté horizontalement sur le châssis 1, de telle manière que les légumes (non représentés) disposés par exemple en A sur le plateau 5 soient entraînés dans le sens de la flèche B, traversent la station de lavage 4 et puissent être récupérés propres en C. Pour permettre l'entrée desdits légumes dans la station de lavage 4, celle-ci comporte des lames latérales souples 6, par exemple des bandes de caoutchouc, qui s'écartent lors du passage des produits déposés sur le plateau tout en évitant le projection de l'eau hors de la station comme cela sera décrit plus en détail ci-après. Un cône 7 coiffe la partie centrale du plateau 5 pour recouvrir des barres de tension obliques servant à renforcer le plateau et garantir sa rigidité lorsqu'il se trouve chargé de légumes. Un levier de commande manuelle 8 disposé à l'arrière du véhicule permet de contrôler le mécanisme d'entraînement (décrit par la suite) du plateau. Une tabulure d'entrée 9 munie d'un robinet 10 sert à raccorder la machine à une source d'alimentation en eau sous pression (non représentée).

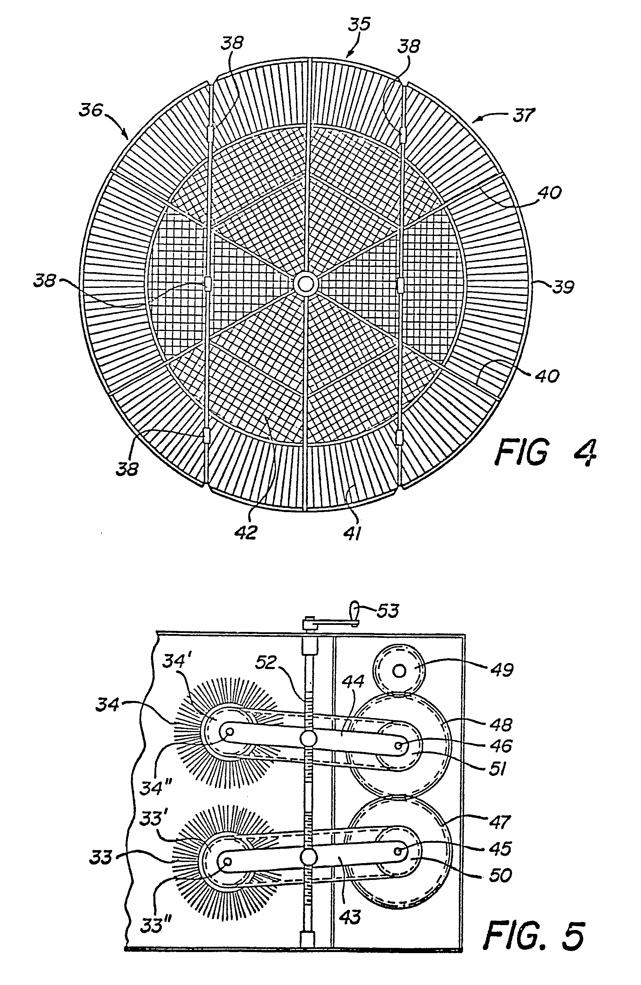

Les fig. 2 et 3 représentent de manière plus détaillée l'aspect intérieur de la machine selon l'invention. Sur la vue de dessus de la fig. 2, le plateau 5 a été retiré, ce que permet de représenter les moyens d'entraînement rotatif du plateau. De même, la capot supérieur de la station de la vage 4 a été enlevé pour permettre d'apercevoir les organes de rinçage et leur agencement à l'intérieur de la station. De même, pour rendre plus claire la vue de l'intérieur de cette station, les brosses décrites de façon plus détaillée en référence aux fig. 3 et 5, ont été supprimées.

En se référant plus précisément à la fig. 2, la station de lavage 4 comprend une tubulure principale 11 qui communique directement avec la tubulure 9. Cette tubulure se divise en trois branches secondaires qui alimentent respectivement des pommes de douche inférieures 12, des pommes de douche supérieures 13 et des pommes de douche centrales 14. Ces pommes engendrent respectivement des jets d'eau sous pression de bas en haut, de haut en bas et d'avant en arrière. En outre, elles sont orientables, de telle manière que les légumes ayant pénétré à l'intérieur de la station 4 subissent un rinçage énergique sur toutes leurs faces. Accessoirement, la station de nettoyage peut comporter une, ou de préférence deux brosses à axes horizontaux, entraînées en sens inverse, qui effectuent un brossage doux des légumes déposés sur le plateau. Cet accessoire utile, mais non indispensable, assure un nettoyage très poussé de légumes particulièrement sales, tels que par exemple de bottes de carottes. Ces brosses sont représentées sur la vue en élévation de la fig. 3.

Les moyens d'entraînement en rotation continue du plateau 5 comprennent essentiellement un axe vertical 15, monté librement sur le châssis 1, une roue d'entraînement 16 comportant une bande périphérique circulaire 17 servant d'appui alternativement aux bandes de roulement périphérique de deux roues motrices 18 et 19. Un vérin hydraulique à double effet 20 est alimenté en eau sous pression par un dispositif de distribution 21 commandé par le déplacement du piston 22 du vérin 20. Une vanne de commande 23 commandée par le levier 8 permet de doser la quantité d'eau sous pression admise dans le distributeur 21. Cette vanne est elle-même alimentée par un tuyau 24 relié à la tubulure d'entrée 9.

Deux traverses 25 et 26 ainsi qu'un longeron 27 servent à supporter l'ensemble des pièces qui constituent le mécanisme d'entraînement, à l'intérieur du châssis 1. Les deux roues motrices 18 et 19 sont montées en rotation libre aux extrémités d'une pièce 28, appelée par la suite bascule, qui peut pivoter autour de son axe central 29. L'extrémité libre de la tige du piston 22 comporte une pièce de fixation articulée 30, qui sert à rattacher ladite tige à un point décentré de la roue 18. D'autre part, les deux roues se trouvent sur la bascule 28 de telle manière qu'elles soient constamment en appui l'une contre l'autre et que la rotation de la roue 18 dans une sens déterminé, entraîne par friction la roue 19 dans la sens contraire.

Le mécanisme d'entraînement fonctionne de la manière suivante: le distributeur 21 alimenté en eau sous pression par la vanne 23, autorise l'introduction de cette eau à la base du vérin 20, par la tubulure 31, ce qui a pour effet de repousser le piston 22 hors du vérin 20 et par là, de faire pivoter la bascule 28 dans la position représentée par la fig. 2, c'est-à-dire dans une position où la roue 18 est un appui contre la bande de roulement périphérique 17 de la roue d'entraînement 16. Le déplacement vers l'avant du piston 22 a également pour effet de faire tourner la roue motrice 18 autour de son axe dans le sens de la flèche M, et, grâce à son appui contre la roue d'entraînement 16, de provoquer l'entraînement par friction de la roue 16 dans les sens de la flèche N.

Ce déplacement du piston provoque la fermeture d'une venne (non représentée) du distributeur 21 et l'ouverture d'une autre vanne (non représentée) de ce même distributeur, de telle manière que l'eau sous pression soit maintenant introduite à la partie supérieure du vérin 20 par l'intermédiaire de la tubulure 32. Le piston 22 est contraint de se déplacer en sens inverse provoquant d'une part le pivotement de la bascule 28 et la rotation de la roue motrice 18 dans le sens inverse à celui de la flèche M. Le pivotement de la bascule 28 engendre l'appui de la bande de roulement de la roue motrice 19 contre la roue d'entraînement 16. La rotation de la roue motrice 18 dans le sens opposé à la flèche M provoque la rotation de la roue 18 dans le sens de la flèche P de la roue motrice 19, et comme cette dernière est en appui sur la roue d'entraînement 16, la rotation de celle-ci dans le sens de la flèche N, c'est-à-dire le même que précédemment. En conséquence, on constate que ce mécanisme permet de réaliser un entraînement en rotation continue du plateau et quasi uniforme en raison de l'inertie, à partir d'un déplacement alternatif d'un piston de vérin hydraulique. L'energie motrice peut être fournie par toute source d'eau sous pression, telle que par exemple une pompe entraînee par le moteur d'un tracteur ou tout autre moyen connu.

Sur la fig. 3, on remarque la disposition des pommes de giclage 12, 13, 14 orientables, et celle des deux brosses 33 et 34 représentées schématiquement. Ces brosses, d'axes horizontaux et de forme sensiblement cylindrique comportent de préférence de longs poils souples et doux. Comme cela sera expliqué en référence à la fig. 5, ces brosses sont rotatives et déplaçables en hauteur de telle manière que les poils de la brosse touchent les légumes et frottent légèrement leur surface pour enlever la terre qui s'y trouve accrochée.

La fig. 4 illustre plus en détail le plateau qui sert à supporter les bottes de légumes et à les transporter dans la station de lavage. Ce plateau peut être réalisé d'une pièce, mais se compose de préférence de plusieurs parties reliées entre elles par des organes de liaison. Le mode de réalisation représenté comprend une partie centrale 35 et deux ailes 36 et 37 reliées à la partie centrale 35 par des charnières 38. Un cadre tubulaire composé d'un cercle 39 et de branches diamétrales 40 constitue la structure générale du plateau. Des renforts tubulaires disposés selon les génératrices du cône 7 complètent cette structure et assurent la rigidité en charge de l'ensemble. Une bordure périphérique 41 est constituée de préférence de fils rigides disposés radialement pour permettre le passage des poils des brosses. Les secteurs intérieurs du plateau sont recouverts d'un grillage 42 quadrillé ou de tout autre matériau approprié. La réalisation du plateau en trois parties reliées par des charnières a l'avantage de faciliter le déplacement de la machine, par exemple sur route, derrière un tracteur, parce que le fait de relever les ailes diminue l'encombrement en largeur du plateau.

La fig. 5 représente un mécanisme d'entraînement de deux brosses 33 et 34 montées dans la station de lavage 4. Les brosses comportent chacune un moyeu cylindrique 33' et 34' rotatifs autour d'axes 33'' et 34'' montés aux extrémités de deux tringles pivotables 43 et 44. Les tringles 43 et 44 sont pivotables autour de deux axes 45 et 46 qui portent également deux pignons dentés 47 et 48 qui s'engrènent de manière à tourner en sens contraire. Le pignon 48 est entraîné par une roue dentée 49 qui est actionnée soit par un renvoi du mécanisme d'entraînement du plateau, soit par un mécanisme indépendant, basé sur le même principe. Les pignons 47 et 48 sont respectivement solidaires de deux roues dentées ou galets 50, 51 qui entraînent par l'intermédiaire d'une chaîne ou d'une courroie crantée ou similaire, les brosses rotatives 33 et 34 en sens contraire. Une tige filetée 52 pouvant être tournée au moyen d'une manivelle 53 permet de déplacer en hauteur les tringles 43 et 44, ce qui permet de rapprocher ou d'éloigner les brosses 33 et 34, en fontion des légumes à nettoyer.

La présente invention est particulièrement avantageuse en ce qu'elle réalise une machine mobile qui ne nécessite aucune source d'énergie autre que l'eau sous pression qui est de toute façon nécessaire pour effectuer un rinçage ou un nettoyage de légumes, et qui se trouve habituellement à disposition sur les terrains consacrés à la culture maraîchère.

## Revendications

1. Machine mobile pour le nettoyage de légumes, en particulier de légumes présentés en botte, comprenant un plateau horizontal (5) monté sur un arbre rotatif (15) et comportant un treillis métallique (42) tendu sur un cadre circulaire (39), et une station de lavage (4) munie d'un dispositif de projection d'eau, pourvu de rampes inférieure et supérieur alimentées par une source extérieure de fluide sous pression, ces éléments étant montés sur un châssis (1) équipé de roues (2) pour véhiculer la machine sur son lieu d'utilisation à proximité de la zone de culture, caractérisée en ce qu'elle comporte un mécanisme hydraulique pour entraîner le plateau (5) en rotation autour de son axe, ce mécanisme comprenant un vérin hydraulique (20) à double effet, undistributeur (30) relié à la source de fluide sous pression, une roue d'entraînement (16) solidaire de l'arbre rotatif (15) du plateau et à proximité de cette roue (16), deux roues motrices (18, 19) montées dans un même plan que celui de la roue d'entrainement (16), aux extrémités d'une bascule (28) à axe de pivotement central (29), ces roues motrices (18, 19) étant en appui l'une contre l'autre de telle manière qu'un mouvement rotatif de l'une entraîne par contact un mouvement rotatif de sens contraire de l'autre, et une pièce de liaison (30) pour relier l'extrémité libre de la tige (22) du piston du vérin hydraulique (20), à un point décentré de l'une des roues motrices (18) de telle manière que le déplacement avant du piston provoque d'une part le pivotement de la bascule dans un premier sens et l'appui de l'une des roues motrices (18), dite premier roue motrice, sur la bande périphérique (17) de la roue d'entraînement (16) et d'autre part la déplacement de la dite roue motrice dans un premier sens, et que le déplacement en arrière du piston provoque d'une part le pivotement de la bascule dans le sens contraire et l'appui de l'autre ou seconde roue motrice (19) sur la bande périphérique (17) de la roue d'entraînement et d'autre part la rotation de la première roue motrice (18) en sens contaire entrainant la rotation de la seconde roue motrice (19) dans le même premier sens, assurant ainsi la rotation continue de la roue d'entraînement (16) par contact alternatif des roues motrices.

2. Machine selon la revendication 1, caractérisée en ce que le plateau comporte une partie centrale (35) dont la largeur est sensiblement égale à l'écartement des roues (2) fixées au châssis, et deux ailes latérales (36 et 37) fixées à la partie centrale (35) pour pouvoir être relevées pendant le déplacement de la machine.

3. Machine selon la revendication 1, comportant des pommes de giclage inférieurs (12) et supérieurs (13) et des brosses rotatives (33, 34), caractérisé en ce qu'elle comporte également des gicleurs frontaux (14) et en ce que les brosses (33, 34) sont montées sur des axes mobiles (33″ et 34″) et reliées à un mécanisme (52, 53) permettant de régler leur écartement en fonction de l'épaisseur des légumes à nettoyer, disposés sur le plateau (5).

4. Machine selon la revendication 3, caractérisée en ce que les brosses (33, 34) sont entraînées en rotation par le mécanisme d'entraînement du plateau rotatif (5).

## Claims

1. A mobile machine for cleaning vegetables, especially vegetables in bunches, with a horizontal tray (5) mounted on a rotating shaft (15) and comprising a metal grill (42) stretched over a circular frame (39), and with a washing station (4) with an arrangement for projecting water, equipped with a lower and an upper feed pipe supplied from an external source of pressurised fluid, these elements being mounted on a chassis (1) fitted with wheels (2) for conveying the machine to the site where it is to be used, close to the growing area, characterised in that it comprises a hydraulic mechanism for transmitting motion to the tray (5) to cause it to rotate around its axis, this mechanism comprising a double-acting hydraulic jack (20), a distributer (30) connected to the source of pressurised fluid, a motion-transmitting wheel (16) rigidly connected to the rotating shaft (15) of the tray and, near to this wheel (16), two drive wheels (18, 19) mounted on the ends of a rocker with a central pivot axis (29), in the same plane as that of the motion-transmitting wheel (16), these drive wheels (18, 19) resting against one another in such a way that the rotation of one of them transmits by contact rotating motion in the opposite direction to the other, and a connecting part (30) connecting the free end of the piston rod (22) of the hydraulic jack (20) to an eccentric point on one of the drive wheels (18) in such a way that the displacement of the piston in a forward direction causes the rocker to pivot in a first direction and one of the drive wheels (18), called the first drive wheel, to rest on the peripheral belt (17) on the motion-transmitting wheel (16), and also causes the said drive wheel to be displaced in a first direction, and the displacement of the piston in a backward direction causes the rocker to pivot in the opposite direction and the other or second drive wheel (19) to rest on the peripheral belt (17) on the motion-transmitting wheel, and also causes the first drive wheel (18) to rotate in the opposite direction, driving the second drive wheel (19) in the same first rotary direction, thus ensuring that the motion-transmitting wheel (16) is rotated continuously by the alternating contact of the drive wheels.

2. A machine according to Claim 1, characterised in that the tray has a central section (35), the width of which is substantially equal to the distance between the wheels (2) attached to the chassis, and two lateral wings (36 and 37) attached to the central section (35) in such a way that they can be raised up while the machine is being moved.

3. A machine according to Claim 1, comprising lower (12) and upper (13) spraying roses and rotating brushes (33, 34), characterised in that it also has frontal roses (14), and that the brushes (33, 34) are mounted on movable axes (33″ and 34″) and are connected to a mechanism (52, 53) which enables the distance between them to be adjusted according to the thickness of the vegetables which are to be cleaned, situated on the tray (5).

4. A machine according to Claim 3, characterised in that the brushes (33, 34) are driven round by the drive mechanism of the rotating tray (5).

## Patentansprüche

1. Mobile Maschine zum Putzen von Gemüse, insbesondere von gebündeltem Gemüse, welche eine horizontale Scheibe (5), die auf einer sich drehenden Achse (15) angebracht ist, und ein Drahtgitter (42) hat, das in einen kreisförmigen Rahmen (39) gespannt ist, une eine Waschstation (4) aufweist, die mit einer Wasserspritzvorrichtung ausgestattet ist, welche mit einer unteren und oberen Brausereihe versehen ist, die über eine außerhalb befindliche Quelle mit unter Druck stehender Flüssigkeit versorgt werden, wobei besagte Elemente auf einen Unterbau (1) motiert sind, der mit Rädern (2) versehen ist, um die Maschine an den Einsatzort in die Nähe der Anbaugebiete zu transportieren, dadurch gekennzeichnet, daß die Maschine einen hydraulischen Mechanismus besitzt, der die Scheibe um ihre Achse rotieren läßt, wobei dieser Mechanismus einen Hydraulikzylinder (20) mit Doppelfunktion, einen Verteiler (21), welcher mit der unter Druck stehenden Flüssigkeitsquelle verbunden ist, ein Reibungsrad (16), das mit der rotierenden Achse (15) der Scheibe verbunden ist und zwei in der Nähe dieses Reibungsrades (16) befindliche Antriebsräder (18, 19), welche in derselben Ebene wie die des Reibungsrades (16) am Ende einer Wippe (28) mit mittiger Drehachse (29) angebracht sind, aufweist, wobei diese Antriebsräder gegeneinander drücken, so daß eine rotierende Bewegung des einen das andere durch Berühren in die entgegengesetzte Richtung antreibt, wobei ein Verbindungsteil (30) das freie Ende der Kolbenstange (22) des Hydraulikzylinders (20) mit einer dezentralen Stelle von einem der Antriebsräder (18) verbindet, so daß die Vorwärtsbewegung des Kolbens einerseits das Drehen der Wippe in eine 1. Richtung bewirkt und sich eines der Antriebsräder (18)—genannt 1. Antriebsrad—gegen die Andruckfläche (17) des Reibungsrades (16) preßt und andererseits das Drehen des genannten Antriebsrades in eine 1. Richtung zur Folge hat, und daß die Rückwärtsbewegung des Kolbens einerseits das Drehen der Wippe in die entgegengesetzte Richtung bewirkt und sich das andere oder zweite Antriebsrad (19) gegen die Andruckfläche (17) des Reibungsrades (16) preßt und andererseits das Drehen des 1. Antriebsrades (18) in entgegensetzter Richtung zur Folge hat, wobei das 2. Antriebsrad (19) in dieselbe 1. Richtung angetrieben wird und somit das kontinuierliche Drehen des Reibungsrates (16) durch wechselseitiges Berühren durch die beiden Antriebsräder gewährleistet ist.

2. Maschine gemäß Anspruch 1, dadurch gekennzeichnet, daß die Scheibe einen mittleren (Teil 35) aufweist, dessen Breite dem Abstand der beiden am Unterbau befestigten Räder (2) entspricht, und zwei Seitenteile (36, 37) hat, die am Mittelteil befestigt sind, und die während des Transports der Maschine hochklappbar sind.

3. Maschine gemäß Anspruch 1, mit unteren Sprühköpfen (12), mit oberen Sprühköpfen (13) und mit rotierenden Bürsten (33, 34) dadurch gekennzeichnet, daß sie an der Stirnseite gleichfalls Sprühdüsen (14) aufweist und daß die Bürsten (33, 34) auf beweglichen Achsen (33″, 34″) montiert sind und mit einem Mechanismus (52, 53) verbunden sind, der es ermöglicht, den Abstand zwischen den Bürsten einzustellen, welcher von der Dicke des zu reinigenden Gemüse, das auf der Platte (5) liegt, abhängt.

4. Maschine gemäß Anspruch 3, dadurch gekennzeichnet, daß die Bürsten (33, 34) durch den Antriebsmechanismus der sich drehenden Scheibe (5) in Rotation versetzt werden.

FIG. 1

FIG. 2

FIG. 3

*FIG 4*

*FIG. 5*

2